# EUROPEAN PATENT APPLICATION

(11) **EP 4 502 046 A1**
(43) Date of publication of application: **05.02.2025**
(21) Application number: 23774477.6
(22) Date of filing: 06.03.2023
(51) Int. Cl.: C08L 27/16, C08K 3/28, C08K 3/30, C08K 3/32

(54) **POLYVINYLIDENE FLUORIDE RESIN COMPOSITION AND MOLDED BODY**

(30) Priority: 25.03.2022 JP 2022049939
(71) Applicant: Kureha Corporation, Chuo-ku Tokyo 103-8552 (JP)
(72) Inventor: OHATA, Ryosuke, Tokyo 103-8552 (JP); SUZUKI, Kazuyuki, Tokyo 103-8552 (JP); IGARASHI, Tamito, Tokyo 103-8552 (JP)
(74) Representative: Zimmermann & Partner Patentanwälte mbB
(86) International application number: PCT/JP2023/008251
(87) International publication number: WO 2023/181878

(57) **Abstract**

To provide a polyvinylidene fluoride resin composition that is less likely to cause dehydrofluorination reaction of the vinylidene fluoride-based polymer during molding and that has high transparency, and a molded body thereof. The resin composition that achieves the object described above contains a vinylidene fluoride-based polymer as a main component, and an ammonium phosphate and/or an imidazolium sulfate.

## Description

### [TECHNICAL FIELD]

The present invention relates to a polyvinylidene fluoride resin composition and a molded body.

### [BACKGROUND ART]

Vinylidene fluoride-based resins exhibit high strength, chemical resistance, heat resistance, ferroelectricity, and the like, and thus are used in various fields. For example, Patent Document 1 describes a resin composition containing a polyvinylidene fluoride-based resin and an alkyl quaternary ammonium sulfate. Since the resin composition has significantly excellent transparency, the resin composition is expected to be applied for optical products and the like.

### [Citation List]

### [Patent Document]

Patent Document 1: JP 2020-105381 A

### [SUMMARY OF INVENTION]

### [Technical Problem]

However, as a result of diligent study conducted by the inventors of the present invention, it is found that, although the resin composition of Patent Document 1 described above has significantly excellent transparency, its thermal stability is unsatisfactory for use in various applications. Specifically, when the resin composition is heated and molded, the vinylidene fluoride-based polymer and the alkyl quaternary ammonium sulfate interact and hydrogen fluoride (HF) may be generated from the vinylidene fluoride-based polymer (herein, also referred to as "dehydrofluorination"). Generation of hydrogen fluoride may affect a molding machine or the surrounding environment, and suppression of a generated amount of dehydrofluorination is required.

An object of the present invention is to provide a resin composition that is less likely to cause dehydrofluorination reaction of the vinylidene fluoride-based polymer during molding and that has high transparency, and a molded body thereof.

### [Solution to Problem]

The present invention provides a polyvinylidene fluoride resin composition containing a vinylidene fluoride-based polymer as a main component, and an ammonium phosphate and/or an imidazolium sulfate.

The present invention provides a molded body of the polyvinylidene fluoride resin composition described above, in which the molded body has a haze of 40% or less at a thickness of 2 mm.

### [Advantageous Effects of Invention]

The polyvinylidene fluoride resin composition of an embodiment of the present invention has high transparency and is less likely to cause a dehydrofluorination reaction during molding of the polyvinylidene fluoride resin composition. Thus, the polyvinylidene fluoride resin composition can be used in various applications including optical use.

### [Description of Embodiments

### 1. Polyvinylidene Fluoride Resin Composition

The polyvinylidene fluoride resin composition of an embodiment of the present invention (hereinafter, also referred to as "resin composition") contains a vinylidene fluoride-based polymer, and an ammonium phosphate or an imidazolium sulfate.

As described above, although a resin composition containing a vinylidene fluoride-based polymer and an alkyl quaternary ammonium sulfate has high transparency, a dehydrofluorination reaction may occur during molding. On the other hand, when the vinylidene fluoride-based polymer and the ammonium phosphate and/or the imidazolium sulfate are combined as in the present invention, the resin composition has significantly high transparency, and also the dehydrofluorination reaction during molding is less likely to occur.

The reason of the high transparency of the resin composition of an embodiment of the present invention is conceived as follows. The crystal structures of the vinylidene fluoride-based polymer include α phase, β phase, and γ phase, and a typical vinylidene fluoride-based polymer has an α phase crystal structure. A vinylidene fluoride-based polymer having an α phase crystal structure typically has low transparency. On the other hand, when the vinylidene fluoride-based polymer is combined with an ammonium phosphate and/or an imidazolium sulfate that are ionic compounds and melt-kneaded, the crystal structure of the vinylidene fluoride-based polymer tends to be a β phase. Thus, it is conceived that significantly high transparency of the resin composition can be achieved.

Furthermore, the reason why a dehydrofluorination reaction is less likely to occur for the vinylidene fluoride-based polymer even when combining it with the ammonium phosphate or the imidazolium sulfate is conceived as follows.

In a speculated mechanism of the dehydrofluorination reaction, the alkyl quaternary ammonium sulfate decomposes when heated, and an alkyl quaternary ammonium cation and a sulfate anion generate an amine and a sulfur oxide, respectively. It is conceived that the generated amine attacks a terminal of the vinylidene fluoride polymer, and thereby a dehydrofluorination reaction proceeds, and a large amount of hydrogen fluoride is generated. Meanwhile, it is conceived that the generated sulfur oxide is vaporized and released outside the system.

Meanwhile, the ammonium phosphate decomposes when heated and generates an amine and a phosphorus oxide. It is conceived that, because the phosphorus oxide generated at this time captures the amine and inhibits attack of the amine on the vinylidene fluoride polymer, it becomes difficult for the dehydrofluorination reaction to proceed and the amount of dehydrofluorination is suppressed.

Furthermore, it is conceived that, because the imidazolium sulfate has a higher decomposition temperature than that of the ammonium sulfate, a chemical species that attacks a terminal of the vinylidene fluoride polymer is not generated, and as a result, the dehydrofluorination reaction can be suppressed. However, for the resin composition according to the present embodiment, the amount of dehydrofluorination generated from the resulting resin composition is only required to be suppressed, and the scope of the invention is not limited by the mechanism thereof.

The vinylidene fluoride-based polymer, the ammonium phosphate, and the imidazolium sulfate contained in the resin composition of an embodiment of the present invention will be described in detail below.

### Vinylidene Fluoride-based Polymer

The resin composition of an embodiment of the present invention contains a vinylidene fluoride-based polymer as a main component. In the present specification, the "vinylidene fluoride-based polymer as a main component" means that 90 parts by mass or greater, more preferably 95 parts by mass or greater, and even more preferably 98 parts by mass or greater, of the vinylidene fluoride-based polymer is contained per 100 parts by mass of the resin composition.

The vinylidene fluoride-based polymer may be a homopolymer of vinylidene fluoride or may be a copolymer of vinylidene fluoride and another monomer. From the viewpoint of allowing the vinylidene fluoride-based polymer to adequately interact with the ammonium phosphate and/or the imidazolium sulfate, the vinylidene fluoride-based polymer preferably adequately contains a constituent unit derived from vinylidene fluoride. Specifically, preferably 90 mol% or greater, more preferably 95 mol% or greater, and even more preferably 98 mol% or greater, of a constituent unit derived from vinylidene fluoride is contained relative to the total amount of constituent units constituting the vinylidene fluoride-based polymer. When the amount of the constituent unit derived from vinylidene fluoride is not less than the value described above, the vinylidene fluoride-based polymer in the resin composition tends to have a desired crystal structure (β phase), and the transparency of the resin composition tends to be high. Furthermore, when the amount of the constituent unit derived from vinylidene fluoride is in the range described above, the specific characteristics of vinylidene fluoride, that is, chemical resistance, heat resistance, ferroelectricity, and the like, tend to be achieved. The amount of the constituent unit derived from vinylidene fluoride in the vinylidene fluoride-based polymer can be determined by, for example, ¹⁹F-NMR analysis or the like.

Meanwhile, the vinylidene fluoride-based polymer may contain only one type or two or more types of constituent units derived from monomers other than vinylidene fluoride. Examples of the monomer other than vinylidene fluoride include a fluorine-containing alkyl vinyl compound containing a vinyl group and a fluorine-containing alkyl group in a molecule. Examples of the fluorine-containing alkyl vinyl compound include vinyl fluoride, trifluoroethylene, tetrafluoroethylene, chlorotrifluoroethylene, hexafluoropropylene, 2,3,3,3-tetrafluoropropene, pentafluoropropene, fluoroalkyl vinyl ether, and perfluoroalkyl vinyl ether such as perfluoromethyl vinyl ether. Examples of other monomers include (meth)acrylic acid and a (meth)acrylate such as methyl (meth)acrylate.

The structure of the vinylidene fluoride-based polymer, that is, the types of monomers to be combined, is appropriately selected based on the application of the vinylidene fluoride-based polymer. For example, from the viewpoint of improving the contamination resistance, ozone resistance, and solvent resistance of the resin composition and a molded body obtained therefrom, a homopolymer of vinylidene fluoride is preferred. On the other hand, from the viewpoint of improving flexibility and tearing strength of the resin composition or a molded body obtained therefrom, a copolymer of vinylidene fluoride and another monomer or a mixture of the copolymer and a vinylidene fluoride homopolymer is preferred. The monomer for copolymerization with vinylidene fluoride is preferably hexafluoropropylene from the viewpoint of flexibility of the resulting molded body.

The molecular weight of the vinylidene fluoride-based polymer described above is appropriately selected based on the desired physical properties of the molded body described above. The molecular weight of the vinylidene fluoride-based polymer can be, for example, represented by an inherent viscosity and is preferably from 0.5 to 2.0 dL/g in a case where moldability is required, for example. The inherent viscosity can be determined based on a known measurement method, for example, the method prescribed in JIS K 7367-1.

Furthermore, from the viewpoint of imparting adequate mechanical strength, gas barrier properties, and solvent resistance to the molded body, the melting point of the vinylidene fluoride-based polymer described above is preferably 130°C or higher and 190°C or lower, more preferably 150°C or higher and 180°C or lower, and particularly preferably 160°C or higher and 180°C or lower. The melting point of the vinylidene fluoride-based polymer can be adjusted by, for example, the amount of the constituent unit derived from vinylidene fluoride in the vinylidene fluoride-based polymer, the molecular weight of the vinylidene fluoride-based polymer, and the like. The melting point can be measured using differential scanning calorimetry.

Note that the method for producing the vinylidene fluoride-based polymer described above is not particularly limited, and examples thereof include emulsion polymerization, soap-free emulsion polymerization, seed emulsion polymerization, suspension polymerization, mini-emulsion polymerization, and solution polymerization. Among these, an emulsion polymerization method or a suspension polymerization method is preferred.

An emulsion polymerization method is a type of a radical polymerization method and is a polymerization method performed by mixing a medium such as water, a monomer that is hardly soluble in the medium, and an emulsifier (hereinafter, also referred to as "surfactant"), and adding a polymerization initiator that is soluble in the medium into the liquid mixture to polymerize monomers (vinylidene fluoride and other monomers). Known compounds can be used as the surfactant or the polymerization initiator. When the vinylidene fluoride-based polymer prepared by emulsion polymerization (herein, also referred to as "emulsion-polymerized vinylidene fluoride-based polymer") is combined with the imidazolium sulfate described below, in particular, high transparency is achieved and the amount of dehydrofluorination tends to be reduced.

On the other hand, a suspension polymerization method is a polymerization method performed by dissolving an oil-soluble polymerization initiator in a water-insoluble monomer in water containing a suspending agent and the like, followed by suspension and dispersion by mechanical agitation. In the suspension polymerization method, vinylidene fluoride polymer particles are produced by allowing the polymerization to proceed in monomer droplets. When the vinylidene fluoride-based polymer prepared by the suspension polymerization (herein, also referred to as "suspension-polymerized vinylidene fluoride-based polymer") is combined with the ammonium phosphate described below, in particular, high transparency is achieved and the amount of dehydrofluorination tends to be reduced.

### Ammonium Phosphate and Imidazolium Sulfate

The resin composition of the present embodiment may contain one of the ammonium phosphate or the imidazolium sulfate or may contain both of the ammonium phosphate and the imidazolium sulfate, but typically preferably contains one of the ammonium phosphate or the imidazolium sulfate.

The ammonium phosphate is a phosphate of ammonium or alkylammonium and is, for example, a compound represented by General Formula (1) below. The resin composition may contain only one type of ammonium phosphate or may contain two or more types of ammonium phosphates. 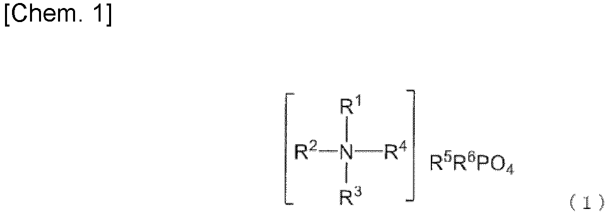 In General Formula (1) above, R¹ to R⁴ each represent a hydrogen atom or the same or different alkyl group having 1 or more and 10 or less carbons. The alkyl group may be linear or branched. Specific examples of the alkyl group include a methyl group, an ethyl group, a propyl group, an isopropyl group, a butyl group, a pentyl group, a hexyl group, a heptyl group, and an octyl group. The total number of hydrogen atoms in R¹ to R⁴ is preferably 52 or less. Furthermore, the total number of carbon atoms contained in R¹ to R⁴ is preferably 6 or more and 30 or less, more preferably 6 or more and 24 or less, and even more preferably 8 or more and 20 or less. Furthermore, the number of carbon atoms contained in each of R¹ to R⁴ is more preferably 2 or more and 6 or less and, specifically, an ethyl group, a propyl group, a butyl group, a pentyl group, or a hexyl group is preferred. When R¹ to R⁴ are these groups, the transparency of the resulting resin composition tends to be significantly high.

Meanwhile, R⁵ and R⁶ in Formula (1) each represent a group bonded to a P atom and each independently represent an alkyl group, a fluoroalkyl group, or a hydrogen atom. The alkyl group is preferably an alkyl group having 1 or more and 10 or less carbons and, specifically, is a linear alkyl group having from 1 to 10 carbons such as a methyl group or an ethyl group, or a branched alkyl group such as an iso-propyl group or a tert-butyl group. Meanwhile, a fluoroalkyl group is a group in which a part or all hydrogens of these alkyl groups are substituted with fluorines. Examples thereof include a trifluoromethyl group and a pentafluoroethyl group. R⁵ and R⁶ are each particularly preferably a hydrogen atom or a tert-butyl group.

Specific examples of the ammonium phosphate represented by General Formula (1) above include ethylammonium phosphate, diethylammonium phosphate, trimethylammonium phosphate, triethylammonium phosphate, tributylammonium pyrophosphate, pentyltriethylammonium phosphate, hexyltriethylammonium phosphate, octyltriethylammonium phosphate, tetramethylammonium dihydrogen phosphate, tetraethylammonium dihydrogen phosphate, tetrabutylammonium phosphate, methyltriethylammonium dibutyl phosphate, dodecyltrimethylammonium phosphate, hexadecyltrimethylammonium dihydrogen phosphate, and tetrahexylammonium dihydrogen phosphate.

Furthermore, the imidazolium sulfate is a sulfate of imidazolium and is, for example, a compound represented by General Formula (2) below. The resin composition may contain only one type of imidazolium sulfate or may contain two or more types of imidazolium sulfates. 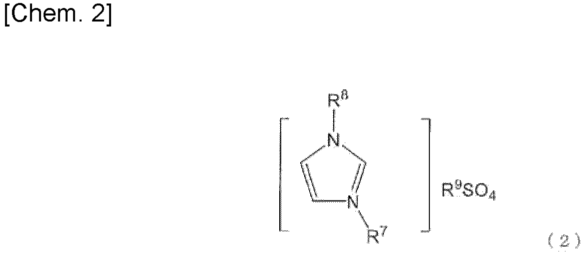 In General Formula (2) above, R⁷ and R⁸ each represent a hydrogen atom or the same or different alkyl group having 1 or more and 10 or less carbons. The alkyl group may be linear or branched. Specific examples of the alkyl group include a methyl group, an ethyl group, a propyl group, an isopropyl group, a butyl group, a pentyl group, a hexyl group, a heptyl group, and an octyl group. Among these, an alkyl group having 1 or more and 4 or less carbons is preferred and, specifically, a methyl group, an ethyl group, a propyl group, and a butyl group are preferred.

In General Formula (2) above, R⁹ is an alkyl group, a fluoroalkyl group, or a hydrogen atom. The alkyl group is preferably a short-chain alkyl group having from 1 to 10 carbons, such as a methyl group or an ethyl group. The fluoroalkyl group is preferably a short-chain fluoroalkyl group having from 1 to 10 carbons, such as CF₃ and C₂F₅. Among these, R⁹ is preferably hydrogen. That is, the imidazolium sulfate is preferably an imidazolium hydrogen sulfate.

Specific examples of the preferred imidazolium sulfate (imidazolium hydrogen sulfate) include 1,3-dimethylimidazolium hydrogen sulfate, 1-methyl-3-propylimidazolium hydrogen sulfate, 1-methyl-3-isopropylimidazolium hydrogen sulfate, 1,3-diethylimidazolium hydrogen sulfate, 1,3-dipropylimidazolium hydrogen sulfate, 1-ethyl-3-propylimidazolium hydrogen sulfate, 1-butyl-3-methylimidazolium hydrogen sulfate, and 1-ethyl-3-methylimidazolium hydrogen sulfate.

Note that the amount of the ammonium phosphate and/or the imidazolium sulfate described above in the resin composition is not particularly limited. However, the total content of the ammonium phosphate and the imidazolium sulfate per 100 parts by mass of the vinylidene fluoride-based polymer described above is preferably 0.1 parts by mass or greater and 2 parts by mass or less, more preferably 0.3 parts by mass or greater and 1.7 parts by mass or less, even more preferably 0.4 parts by mass or greater and 1.5 parts by mass or less, and particularly preferably 0.7 parts by mass or greater and 1.3 parts by mass or less. When the total content of the ammonium phosphate and the imidazolium sulfate in the resin composition is in the range, high transparency of the resin composition and a molded body thereof tends to be high, and the amount of dehydrofluorination during molding can be reduced.

### (Other components)

The resin composition according to the present embodiment may further contain another component in a range in which the effects of the present embodiment can be achieved. One type of the other component may be used, or two or more types may be used. The content of additives in the resin composition can be appropriately determined within a range in which both the effects of the present embodiment and the effects of the additives are achieved. Examples of the other components described above include additives and polymers besides the vinylidene fluoride polymer. Examples of the additives include thermal stabilizers, UV absorbers, light stabilizer, lubricants, plasticizers, bluing agents, and anti-coloration agents.

### • Method for Producing Resin Composition

The resin composition described above can be produced, for example, by preparing each of the vinylidene fluoride-based polymer and the ammonium phosphate and/or the imidazolium sulfate described above; and then, mixing them, and melt-kneading the mixture at a temperature that is not lower than the melting point of the vinylidene fluoride-based polymer. The temperature during production of the resin composition is preferably 160°C or higher and 280°C or lower. By heating to this temperature, the crystal structure of the vinylidene fluoride-based polymer can be a β phase, and a resin composition and a molded body that have high transparency tend to be produced.

Examples of the device for mixing the materials of the resin composition include a Henschel blender, a cylindrical mixer, a screw-type mixer, a screw-type extruder, a turbulizer, a Nauta mixer, a V-type mixer, a ribbon mixer, a double arm kneader, a flow-type mixer, an air flow-type mixer, a rotary disk mixer, a roll mixer, a rolling mixer, and a Loedige mixer. Furthermore, a pellet-like resin composition can be produced by melt-extruding a material obtained by directly mixing the vinylidene fluoride polymer and the ammonium phosphate and/or the imidazolium sulfate or by mixing the vinylidene fluoride polymer and an aqueous solution of the ammonium phosphate and/or the imidazolium sulfate and drying the mixture. Examples of the extruder include a single screw extruder, a co-rotating twin screw extruder, and a counterrotating twin screw extruder.

### 2. Molded Body

The molded body of the resin composition described above can be produced by heating and molding the resin composition described above. The method for molding the resin composition described above is not particularly limited and can be performed similarly to a known molding method. However, at the time of heating, a molding temperature is preferably 280°C or lower also to reduce the amount of dehydrofluorination of the vinylidene fluoride-based polymer. Also at this time, change in the crystal structure of the vinylidene fluoride-based polymer in the resin composition described above is preferably made small, that is, a highly transparent state is preferably maintained. Specifically, molding is preferably performed under cooling at a temperature of 80°C or lower for 60 seconds or longer.

The shape of the molded body is not particularly limited and may be, for example, a film shape or a plate shape or may be a three-dimensional structure. The structure of the molded body is appropriately selected based on the application of the molded body.

The haze of the molded body at a thickness of 2 mm is preferably 40% or less, more preferably 30% or less, and even more preferably 20% or less. When the haze of the molded body at a thickness of 2 mm is 40% or less, the molded body can be used for an application that requires transparency, such as an optical product. Note that the haze described above is a value measured by using a haze meter in accordance with JIS K 7136. Furthermore, even when the thickness of the molded body is not 2 mm, the haze described above can be calculated based on an empirical formula using a value obtained by measuring the haze of the molded body. Typically, for a molded body having a thickness of 8 mm or less, the relationship between the haze and the thickness can be expressed by a linear expression. Thus, an empirical formula may be created based on the composition or the like of the molded body, and calculation may be performed based on the formula.

Such a molded body can also be used for an optical product, such as an optical film or an optical lens, in addition to the same applications of a typical polyvinylidene fluoride.

### [Examples]

Hereinafter, specific examples of the present invention will be described together with comparative examples, but the present invention is not limited to these.

### Example 1

A suspension-polymerized vinylidene fluoride-based polymer (Polymer A, vinylidene fluoride homopolymer; inherent viscosity: 1.070 dL/g; melting point: 171°C) was prepared by the same method as in Example 4 of WO 2006/061988. In 100 parts by mass of Polymer A, 1 part by mass of tetrabutylammonium phosphate (hereinafter, also described as "N26") was added. Next, the mixture was extruded with a co-rotating twin screw extruder (TEM-26, available from Toshiba Machine Co., Ltd.) at a cylinder temperature of 190°C to obtain a pellet-like resin composition 1.

### Example 2

In 100 parts by mass of an emulsion-polymerized vinylidene fluoride-based polymer (Kynar (trade name) 740, available from Arkema; vinylidene fluoride homopolymer), 1 part by mass of 1-butyl-3-methylimidazolium hydrogen sulfate (hereinafter, also described as "112") was added, and the mixture was extruded in the same manner as in Example 1 with a co-rotating twin-screw extruder to obtain a pellet-like resin composition 2.

### Example 3

A pellet-like resin composition 3 was obtained in the same manner as in Example 2 except for using tetrabutylammonium phosphate (N26) in place of the 1-butyl-3-methylimidazolium hydrogen sulfate (112) described above.

### Example 4

A pellet-like resin composition 4 was obtained in the same manner as in Example 1 except for changing the amount of tetrabutylammonium phosphate (N26) to 0.3 parts by mass.

### Example 5

A pellet-like resin composition 5 was obtained in the same manner as in Example 1 except for changing the amount of tetrabutylammonium phosphate (N26) to 0.5 parts by mass.

### Example 6

A pellet-like resin composition 6 was obtained in the same manner as in Example 1 except for changing the amount of tetrabutylammonium phosphate (N26) to 2 parts by mass.

### Example 7

A pellet-like resin composition 7 was obtained in the same manner as in Example 1 except for changing the vinylidene fluoride-based polymer to a suspension-polymerized vinylidene fluoride-based polymer (KF#2300, available from Kureha Corporation; vinylidene fluoride-hexafluoropropylene copolymer).

### Example 8

A pellet-like resin composition 8 was obtained in the same manner as in Example 1 except for using 1 part by mass of tetra-N-butylammonium di-tert-butylphosphate (hereinafter, also described as "N30") in place of tetrabutylammonium phosphate (N26).

### Comparative Example 1

A pellet-like resin composition 9 was obtained in the same manner as in Example 1 except for using no tetrabutylammonium phosphate (N26).

### Comparative Example 2

A pellet-like resin composition 10 was obtained in the same manner as in Example 2 except for using no 1-butyl-3-methylimidazolium hydrogen sulfate (112).

### Comparative Example 3

A pellet-like resin composition 11 was obtained in the same manner as in Example 1 except for using 1 part by mass of tetrabutylammonium hydrogen sulfate (hereinafter, also described as "TBAHS") in place of tetrabutylammonium phosphate (N26).

### Comparative Example 4

A pellet-like resin composition 12 was obtained in the same manner as in Example 2 except for using 1 part by mass of tetrabutylammonium hydrogen sulfate (TBHAS) in place of 1-butyl-3-methylimidazolium hydrogen sulfate (112).

### Method for Producing Molded Body

The resin composition prepared in each of Examples and Comparative Examples described above was sandwiched by two sheets of aluminum foils, and stainless steel (SUS) plates were disposed on outer sides of the aluminum foils. Then, this article was pressed at 200°C for 5 minutes under a pressure of 5 MPa using a compression molding machine (Model AYSR-5, available from Shinto Metal Industries, Ltd.). Next, the pressed article was immediately cooled (quenched) with a cold press at 30°C for 3 minutes while the pressed article remained sandwiched between the SUS plates. A sheet-like molded body was thus produced. The thickness of the molded body was measured five times for each sample using a thickness gauge "DG-925" (available from Ono Sokki Co., Ltd.), and the average value was determined. This average value was used as the thickness of the molded body. All of the thicknesses were 2 mm.

### (Haze)

The haze of each of the molded bodies (thickness: 2 mm) was measured using a haze meter "NDH4000" (available from Nippon Denshoku Industries Co., Ltd.) in accordance with JIS K 7136. The results are indicated in Table 1.

### Amount of Dehydrofluorination

A sheet-like molded body was produced by the same method as the method for producing the molded body described above. 300 mg of the sheet was placed on a quartz glass board and heated at 260°C for 2 hours in a nitrogen flow at 100 mL/min using a ceramic electric tubular furnace (available from Asahi-Rika Co., Ltd.). At this time, the generated gas was absorbed in 20 mL of NaHCO₃+Na₂CO₃ aqueous solution, followed by volumetric adjustment to 30 mL. Note that, after the volumetric adjustment, the initial concentrations of NaHCOs and Na₂CO₃ were respectively adjusted to 1.9 mM and 3.2 mM. The fluorine ion concentration of the solution was determined by using an ion chromatogram (model: IC-2010, available from Tosoh Corporation). The results are indicated in Table 1.

**[Table 1]**

| | Vinylidene fluoride-based polymer | | Additive | | Result | |
|---|---|---|---|---|---|---|
| | Type | Content (parts by mass) | Type | Content | Haze of molded body (%) | Amount of dehydrofluorination (260°C 2 hr) (µg/g) |
| Example 1 | Polymer A | 100 | N26 | 1 | 20 | 955 |
| Example 2 | Kynar 740 | 100 | I12 | 1 | 21 | 1299 |
| Example 3 | Kynar 740 | 100 | N26 | 1 | 25 | 1131 |
| Example 4 | Polymer A | 100 | N26 | 0.3 | 56 | 747 |
| Example 5 | Polymer A | 100 | N26 | 0.5 | 35 | 903 |
| Example 6 | Polymer A | 100 | N26 | 2 | 27 | 1432 |
| Example 7 | #2300 | 100 | N26 | 1 | 26 | 1401 |
| Example 8 | Polymer A | 100 | N30 | 1 | 23 | 998 |
| Comparative Example 1 | Polymer A | 100 | - | - | 98 | 14 |
| Comparative Example 2 | Kynar 740 | 100 | - | - | 99 | 299 |
| Comparative Example 3 | Polymer A | 100 | TBAHS | 1 | 11 | 1909 |
| Comparative Example 4 | Kynar 740 | 100 | TBAHS | 1 | 33 | 1769 |

| | | | | | | |
|---|---|---|---|---|---|---|
| * Polymer A and #2300: Suspension-polymerized vinylidene fluoride-based polymer Kynar 740: Emulsion-polymerized vinylidene fluoride-based polymer N26: Tetrabutylammonium phosphate N30: Tetra-N-butylammonium di-tert-butylphosphate I12: 1-Butyl-3-methylimidazolium hydrogen sulfate TBAHS: Tetrabutylammonium hydrogen sulfate | | | | | | |

As shown in Table 1 above, the molded body containing the vinylidene fluoride-based polymer only exhibited a high haze regardless of the method for producing the vinylidene fluoride-based polymer (Comparative Examples 1 and 2). Furthermore, when tetrabutylammonium hydrogen sulfate was added in the vinylidene fluoride-based polymer, the amount of dehydrofluorination was significantly high although the haze decreased (Comparative Examples 3 and 4). On the other hand, when the ammonium phosphate or the imidazolium sulfate (imidazolium hydrogen sulfate) was added to the vinylidene fluoride-based polymer, the amount of dehydrofluorination was significantly small in addition to the decreased haze of the molded body (Examples 1 to 8).

The present application claims priority to Japanese patent application No. 2022-049939 filed on March 25, 2022. The contents described in the specification of the foregoing application are all incorporated in the specification of the present application by reference.

### [Industrial Applicability]

According to the present invention, a resin composition and a molded body thereof that have high transparency and cause a less amount of dehydrofluorination during molding can be obtained. The resin composition and the molded body thereof can be used for products that require transparency, such as optical products, in addition to typical resin products and are significantly useful in various industrial fields.

## Claims

1. A polyvinylidene fluoride resin composition comprising:
a vinylidene fluoride-based polymer as a main component, and
an ammonium phosphate and/or an imidazolium sulfate.

2. The polyvinylidene fluoride resin composition according to claim 1, wherein
a total content of the ammonium phosphate and the imidazolium sulfate is 0.1 parts by mass or greater and 2 parts by mass or less per 100 parts by mass of a content of the vinylidene fluoride-based polymer.

3. The polyvinylidene fluoride resin composition according to claim 1 or 2, wherein
the ammonium phosphate includes an alkyl quaternary ammonium phosphate.

4. The polyvinylidene fluoride resin composition according to any one of claims 1 to 3, comprising:
the ammonium phosphate; and
a suspension-polymerized vinylidene fluoride-based polymer.

5. The polyvinylidene fluoride resin composition according to any one of claims 1 to 3, comprising:
the imidazolium sulfate; and
an emulsion-polymerized vinylidene fluoride-based polymer.

6. The polyvinylidene fluoride resin composition according to any one of claims 1 to 5, wherein
the vinylidene fluoride-based polymer is a homopolymer of vinylidene fluoride.

7. A molded body of the polyvinylidene fluoride resin composition described in any one of claims 1 to 6, wherein
the molded body has a haze of 40% or less at a thickness of 2 mm.
